# DEMANDE DE BREVET EUROPEEN

(11) **EP 0 814 576 A1**
(43) Date de publication de la demande: **29.12.1997**
(21) Numéro de dépôt: 97401289.0
(22) Date de dépôt: 09.06.1997
(51) Int. Cl.: H04B 7/195

(54) **Constellation de satellites non geostationnaires à couverture permanente**

(30) Priorité: 18.06.1996 FR 9607539
(71) Demandeur: ALCATEL ESPACE, F-92737 Nanterre Cédex (FR)
(72) Inventeur: Palmade, Jean-Luc, 31140 Aucamville (FR); Frayssinhes, Eric, 31000 Toulouse (FR); Lansard, Erick, 31520 Ramonville-Ste-Agne (FR)
(74) Mandataire: Smith, Bradford Lee

(57) **Abrégé**

L'invention concerne un système de communication et/ou de navigation basé sur une constellation de satellites non géostationnaires- en orbite autour du globe terrestre. Cette constellation présente un regroupement par paires des satellites (S1,S1'), (S2,S2') et des plans orbitaux (P1,P1'), (P2,P2'). Les paires de plans orbitaux sont espacées entre elles d'un angle (δ) différent de l'espacement (α) entre plans orbitaux d'une même paire et les satellites (S1,S1') d'une même paire présentent un déphasage orbital (β) différent du déphasage orbital (γ) entre paires de satellites de paires de plans orbitaux différents. Ce type de constellation permet d'assurer une couverture permanente, par au moins un satellite, d'une zone géographique d'intérêt en tenant compte de la contrainte de coordination de fréquence.

## Description

L'invention porte sur un système de communication et/ou de navigation à base d'une constellation de satellites non géostationnaires répartis dans des plans orbitaux autour du globe terrestre.

Les nouveaux systèmes de communication et/ou de navigation par satellites font de plus en plus appel aux satellites en orbite non géostationnaire, par exemple en orbite basse ("LEO"), en orbite moyenne ou haute, circulaire ou elliptique ("MEO","HEO",...) et mettent en oeuvre un grand nombre de tels satellites afin d'assurer une couverture complète d'une zone géographique d'intérêt généralement mondiale ou multi-régionale. Dans ces systèmes, les satellites sont généralement sur des orbites semblables, c'est-à-dire de même altitude et de même inclinaison.

Certaines bandes de fréquences, par exemple les bandes Ku, Ka, L, etc. présentent un grand intérêt pour ces nouveaux systèmes mais possèdent l'inconvénient d'être également utilisées par de nombreux satellites des systèmes de télécommunications et/ou de navigation en orbite géostationnaire.

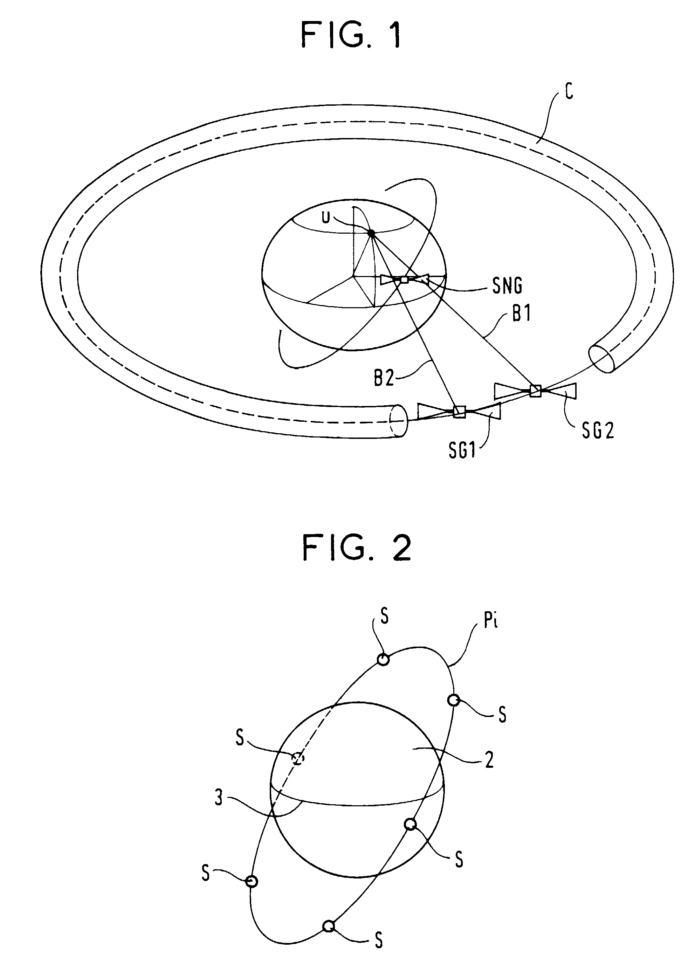

Il s'ensuit que les liaisons radioélectriques établies à partir de ces satellites non géostationnaires de ces nouveaux systèmes, doivent obéir aux règles de coordination de fréquence édictées par l'Union Internationale des Télécommunications, afin de ne pas brouiller ou de ne pas être brouillées par d'autres systèmes, spatiaux ou non. La figure 1 illustre les conditions géométriques de brouillage radioélectrique d'une liaison entre un utilisateur terrestre U et un ou des satellites SG1 ou SG2 de la ceinture géostationnaire C par un satellite non géostationnaire SNG. La condition de brouillage existe lorsqu'il y a un certain alignement entre l'utilisateur, le satellite non géostationnaire et un satellite géostationnaire, comme illustré sur la figure 1 par les deux lignes B1 et B2.

Cette coordination de fréquence impose à l'opérateur de ces nouveaux systèmes de faire en sorte que la liaison radioélectrique établie entre un satellite non géostationnaire et la surface du globe terrestre, soit interrompue à chaque fois que ce satellite se trouve en alignement avec un satellite géostationnaire et un utilisateur terrestre (à une certaine tolérance près) ce qui contribue à l'augmentation du nombre de satellites non géostationnaires nécessaires pour assurer la permanence du service sur la zone géographique d'intérêt et donc à une augmentation des coûts de ces nouveaux systèmes.

De nombreuses études ont déjà été menées sur le problème de la couverture complète et permanente du globe terrestre par des satellites non géostationnaires. Ces études ont abouti à des constellations de satellites dites symétriques comme celles de Messieurs WALKER, RIDER, BALLARD ou autres. Dans ces constellations connues, les plans d'orbites et la position des satellites non géostationnaires sont uniformément répartis. C'est ainsi qu'en particulier, les satellites situés dans un même plan orbital sont équidistants et les plans orbitaux sont répartis uniformément dans le plan équatorial terrestre (WALKER ET BALLARD) ou dans le demi-plan équatorial terrestre (RIDER).

Le but de l'invention est de proposer un système de communication et/ou de navigation basé sur un autre type de constellations de satellites en orbite non géostationnaire qui permet de garantir la permanence de la couverture d'une zone géographique d'intérêt, comme la surface du globe terrestre, par au moins un satellite, en tenant compte de la contrainte de coordination de fréquence, et ce de manière plus efficace que par le recours à une constellation symétrique classique optimale au sens de la couverture par au moins deux satellites après prise en compte de la contrainte de coordination.

A cet effet, l'invention a pour objet un système de communication et/ou de navigation à base d'une constellation de satellites non géostationnaires répartis dans des plans orbitaux autour du globe terrestre, caractérisé en ce que dans la constellation :
- les plans orbitaux sont répartis par paires, les paires de plans orbitaux étant espacées régulièrement entre elles dans le plan équatorial du globe terrestre et l'espacement entre deux paires successives de plans orbitaux étant différent de l'espacement entre deux plans orbitaux d'une même paire de plans orbitaux;
- les satellites sont répartis par paire dans les paires de plans orbitaux, les satellites d'une paire de satellites étant répartis dans des plans orbitaux différents de la même paire de plans orbitaux, les deux satellites d'une même paire de satellites présentant un premier déphasage orbital l'un par rapport à l'autre et dans deux paires successives de plans orbitaux, les paires de satellites de la première paire de plans orbitaux et les paires de satellites de la seconde paire de plans orbitaux présentent entre elles un second déphasage orbital différent du double du premier déphasage orbital.

Selon un mode de réalisation particulier de l'invention, les plans orbitaux d'une même paire de plans orbitaux sont confondus.

Indépendamment du problème de la coordination de fréquence, on notera que cette structure géométrique de la constellation selon l'invention peut répondre avantageusement à des problèmes complexes de disponibilité et/ou de capacité de couverture. Plus particulièrement, ce principe de dédoublement des plans orbitaux et des satellites dans les plans orbitaux avec certains déphasages entre plans regroupés ou entre satellites regroupés comme indiqué ci-dessus permet d'aboutir, par rapport à des constellations classiques (comme celles de Walker) et à nombre égal de satellites, à des constellations optimisées de satellites pour système de navigation, de télécommunication et multimédia notamment, présentant une résistance accrue à la dégradation et/ou une capacité de couverture accrue dans certaines zones de couverture d'intérêt, comme la zone de latitude 20-60°.

Un exemple de réalisation de l'invention est décrit ci-après en détails en référence aux dessins.

La figure 1 illustre schématiquement les conditions géométriques de brouillage radioélectrique d'une liaison entre un utilisateur terrestre et des satellites de la ceinture géostationnaire par un satellite non géostationnaire.

La figure 2 illustre schématiquement un plan orbital particulier d'une constellation symétrique classique montrant une répartition uniforme de satellites non géostationnaires dans le plan orbital.

La figure 3 est un graphique qui illustre schématiquement le regroupement par paires des satellites et des plans orbitaux, les espacements entre paires de plans orbitaux et entre plans orbitaux d'une même paire et les déphasages orbitaux entre satellites d'une même paire et entre paires de satellites de paires de plans orbitaux différents pour une constellation selon l'invention.

La figure 4 met en évidence un déphasage orbital entre satellites d'une même paire selon l'invention.

La figure 5 met en évidence un espacement dans le plan équatorial terrestre de deux plans orbitaux d'une même paire de plans orbitaux selon l'invention.

Sur les figures, les mêmes références désignent des éléments identiques.

Figure 2, on a illustré très schématiquement un plan orbital d'une constellation symétrique classique de satellites non géostationnaires, par exemple une constellation symétrique de WALKER, avec un petit nombre de satellites non géostationnaires, ici six satellites indiqués par S. On voit que ces satellites non géostationnaires sont déphasés régulièrement entre eux dans le plan orbital Pi autour de la surface du globe terrestre 2. Dans ce type de constellations connues, les plans orbitaux tels que Pi sont espacés régulièrement entre eux dans le plan équatorial terrestre 3.

La famille de constellations pour un système de communication et/ou de navigation selon l'invention ne présente pas cette régularité de répartition des plans orbitaux dans le plan équatorial et des satellites dans l'ensemble des plans orbitaux.

Plus précisément, dans une constellation selon l'invention, les plans orbitaux sont répartis par paires et les paires de plans orbitaux sont espacées régulièrement entre elles dans le plan équatorial du globe terrestre.

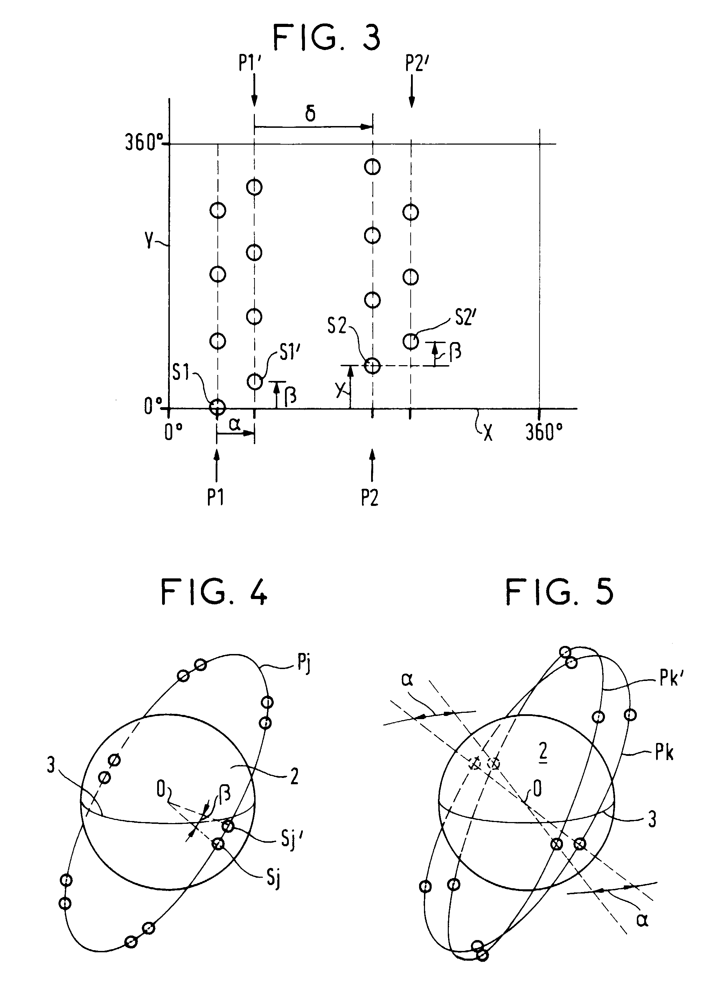

La figure 3 est un graphique qui situe en abscisses X les positions de plans orbitaux dans le plan équatorial terrestre et en ordonnées Y les positions orbitales de satellites non géostationnaires dans ces plans.

Figure 3, on a représenté à titre d'exemple deux paires de plans orbitaux (P1,P1') et (P2,P2') espacées entre elles d'un angle δ suivant l'axe X. Par ailleurs, comme visible sur cette figure, l'espacement angulaire δ entre deux paires successives de plans orbitaux telles que (P1,P1') et (P2,P2') est différent de l'espacement angulaire α entre deux plans orbitaux d'une même paire de plans orbitaux tels que P1 et P1' ou P2 et P2'.

Ensuite, on voit sur cette figure 3 que les satellites tels que S1 et S1' sont répartis par paires dans les paires de plans orbitaux comme (P1,P1') et les satellites d'une paire de satellites tels que S1 et S1' sont répartis dans des plans orbitaux différents de la même paire de plans orbitaux, ici P1 et P1'. Par ailleurs, les deux satellites d'une même paire de satellites comme S1 et Sl' ou S2 et S2' présentent un premier déphasage orbital, l'angle β suivant l'axe Y des positions orbitales, l'un par rapport à l'autre.

Enfin, dans deux paires successives de plans orbitaux, par exemple les paires (P1,P1') et (P2,P2'), les paires de satellites de la première paire de plans orbitaux, par exemple la paire (S1,S1'), et les paires de satellites de la seconde paire de plans orbitaux, par exemple la paire (S2,S2'), présentent entre elles un second déphasage orbital, ici l'angle γ suivant l'axe Y, différent du double du premier déphasage orbital qui est l'angle β.

Les deux plans orbitaux d'une paire de plans orbitaux peuvent être confondus, de sorte que l'angle α peut avoir une valeur nulle si on veut privilégier les coûts de mise en place et d'entretien de la constellation mais éventuellement au détriment de la performance technique.

La figure 4 illustre sur un seul plan orbital Pj, le déphasage orbital d'un angle β entre deux satellites d'une même paire, ici les satellites Sj et Sj'. Dans cette figure, les deux plans d'une paire de plans orbitaux sont confondus, O désignant le centre du globe terrestre.

La figure 5 illustre l'espacement d'un angle α dans le plan équatorial terrestre 3 entre deux plans orbitaux Pk et Pk' de la même paire quand ils ne sont pas confondus.

Pour des constellations symétriques de WALKER ou de RIDER, on a pour les angles α,β,δ, et γ exprimés en degrés, les relations suivantes:

| | |
|---|---|
| Walker: | δ = α = 360/P degrés |
| | β est un multiple entier de 360/T degrés |
| | γ = 2β |
| avec T: nombre entier quelconque de satellites | |
| P: nombre entier de plans orbitaux, P divisant T, | |
| T/P étant le nombre de satellites par plan orbital | |

| | |
|---|---|
| Rider: | δ = α = 180/P degrés |
| | β est quelconque et γ = 2β |

Dans le cadre de la famille de constellations selon l'invention, on a les relations suivantes:
δ ≠ α
γ ≠ 2β
α + δ est un multiple entier de 360/P degrés
avec T: nombre entier pair quelconque de satellites
P: nombre entier pair de plans orbitaux, P divisant T,
T/P étant le nombre de satellites par plan orbital

Les angles α,β,δ, et γ sont calculés en fonction du nombre de plans orbitaux et de satellites pour garantir la couverture permanente par au moins un satellite de la zone géographique d'intérêt en respectant la contrainte de coordination de fréquence. Dans le mode de fonctionnement du système de communication et/ou de navigation selon l'invention, chaque satellite qui se trouve en alignement entre un utilisateur de la surface du globe terrestre et la ceinture géostationnaire interrompt sa liaison radioélectrique, celle-ci étant prise en charge par un autre satellite non géostationnaire qui n'est pas en position de brouillage.

L'invention a été décrite ci-dessus à l'aide de dessins illustrant seulement deux paires de plans orbitaux mais il est évident que l'invention s'étend à des constellations pouvant comporter un plus grand nombre de paires de plans, par exemple 8 paires de plans, avec dans chaque plan un nombre quelconque de satellites. Par ailleurs, l'invention s'étend aussi à des constellations dans lesquelles des satellites supplémentaires sont adjoints aux paires de satellites notamment dans le cas où on recherche à renforcer la disponibilité et/ou la capacité de couverture du système de communication.

## Revendications

1. Un système de communication et/ou de navigation à base d'une constellation de satellites non géostationnaires (S1,S1',S2,S2') répartis dans des plans orbitaux (P1,P1',P2,P2') autour du globe terrestre, caractérisé en ce que, dans la constellation:
- les plans orbitaux sont répartis par paires ((P1,P1'),(P2,P2')), les paires de plans orbitaux étant espacées régulièrement entre elles dans le plan équatorial (3) du globe terrestre et l'espacement (δ) entre deux paires successives de plans orbitaux ((P1,P1'),(P2,P2')) étant différent de l'espacement (α) entre deux plans orbitaux (P1,P1') d'une même paire de plans orbitaux;
- les satellites sont répartis par paires (S1,S1') dans les paires de plans orbitaux, les satellites (S1,S1') d'une paire de satellites étant répartis dans des plans orbitaux différents (P1,P1') de la même paire de plans orbitaux, les deux satellites d'une même paire de satellites (S1,S1') présentant un premier déphasage orbital (β) l'un par rapport à l'autre et, dans deux paires successives de plans orbitaux, les paires de satellites (S1,S1') de la première paire de plans orbitaux et les paires de satellites (S2,S2') de la seconde paire de plans orbitaux présentent entre elles un second déphasage orbital (γ) différent du double du premier déphasage orbital (β).

2. Le système selon la revendication 1, dans lequel les plans orbitaux d'une même paire de plans orbitaux sont confondus.
